# EUROPÄISCHE PATENTANMELDUNG

(11) **EP 2 940 623 A2**
(43) Veröffentlichungstag der Anmeldung: **04.11.2015**
(21) Anmeldenummer: 15001542.8
(22) Anmeldetag: 08.05.2012
(51) Int. Cl.: G06K 7/00, G06K 19/07, G06K 19/077, G07F 7/08

(54) **VERFAHREN ZUM DATENAUSTAUSCH ZWISCHEN LESEGERÄT UND CHIPKARTE**

(30) Priorität: 11.05.2011 DE 102011101297; 31.08.2011 DE 102011112031
(62) Teilanmeldung aus: 12721174.6
(71) Anmelder: Giesecke & Devrient GmbH, 81677 München (DE)
(72) Erfinder: Büttner, Bernhard, 82110 Germering (DE); Griesmeier, Robert, 83052 Bruckmühl (DE); Hartel, Karl Eglof, 80689 München (DE)

(57) **Zusammenfassung**

Die Erfindung betrifft ein Verfahren sowie eine Chipkarte zum Austausch von Daten zwischen einem Speicherbereich (3) einer Chipkarte und einem Endgerät, wobei der Datenaustausch zwischen Endgerät und Chipkarte kontaktbehaftet über ein Kontaktfeld (1) gemäß ISO-7816-2 erfolgt. Das Verfahren umfasst die Schritte: Aktivieren einer ersten Kontaktbelegung in Reaktion auf ein an dem Kontaktfeld anliegenden ersten Kommunikationsprotokoll (ISO, SWP), wobei das erste Kommunikationsprotokoll (ISO, SWP) einen ersten Teil von Kontaktflächen (C1, C2, C3, C5, C6, C7) des Kontaktfelds (1) belegt; Erkennen eines Wechsels des Kommunikationsprotokolls (ISO, SWP, USB) von einem ersten Kommunikationsprotokoll (ISO, SWP) zu einem zweiten Kommunikationsprotokoll (USB) durch eine Protokollerkennungseinheit (21) innerhalb der Chipkarte; und Aktivieren einer zweiten Kontaktbelegung in Reaktion auf das erkannte zweite Kommunikationsprotokoll (USB), wobei das zweite Kommunikationsprotokoll (USB) einen zweiten Teil von Kontaktflächen (C1, C5, C6, C7) des Kontaktfeldes (1) belegt. Dabei ist der erste und der zweite Teil von Kontaktflächen des Kontaktfeldes aus einem ISO-7816-2 Kontaktfeld (1) mit maximal sechs Kontaktflächen gewählt und das zweite Kommunikationsprotokoll (USB) benötigt mindestens zwei Datenleitungen (D+, D-).

## Beschreibung

Die Erfindung betrifft ein Verfahren sowie eine Chipkarte zum Austausch von Daten zwischen einer Chipkarte und einem Endgerät.

Bei einer Chipkarte handelt es sich um einen tragbaren Datenträger mit entsprechender Sicherheitsfunktionalität. Innerhalb der Chipkarte ist zumindest ein Halbleiterchip mit einer zentrale Recheneinheit CPU und einem Speicherbereich mit unterschiedlichen Speichertechnologien, insbesondere flüchtigen und nichtflüchtigen Speicherbereichen angeordnet ist. Auf dem Halbleiterchip sind gespeicherte maschinenlesbaren Daten, beispielsweise Identifikationsdaten einer Person, Geheimnisse wie Passwörter oder Zugangscodes, private Teile von Signaturschlüsseln etc.

Heutzutage werden vielfältige Chipkarten verwendet, die ein Nutzer mit sich führen kann, um unterschiedliche Dienstleistungen in Anspruch zu nehmen oder Transaktionen durchzuführen. So werden beispielsweise Mobilfunkkarten als Chipkarten eingesetzt, um durch eine entsprechende Authentisierung einen Zugang zu gesicherten Bereichen oder Dienstleistungen zu erhalten, z. B. die über ein Mobilfunknetzes bereitgestellten Applikationen eines Mobilfunkanbieters zu erhalten. Je nach Typ und Einsatzart eines solchen Datenträgers wird der Austausch von Daten zwischen dem Datenträger und einem mit diesem in Kontakt stehenden Endgerät, beispielsweise ein mobiles Telekommunikationsendgerät oder ein Bankterminal, über ein geeignetes Kommunikationsprotokoll durchgeführt.

Als ein Austausch von Daten wird hierbei eine Signalübertragung, eine wechselseitige Steuerung und in einfachen Fällen auch eine Verbindung von/zwischen dem technischen Endgerät und der Chipkarte verstanden. In der Informationstheorie wird ein Datenaustausch unter anderem durch das Sender-Empfänger-Modell geprägt: Daten bzw. Informationen werden in Zeichen kodiert und dann von einem Sender über einen Übertragungskanal an einen Empfänger übertragen. Dabei ist entscheidend, dass Sender und Empfänger dieselbe Kodierung verwenden, damit der Empfänger die Nachricht versteht d.h. die auszutauschenden Daten dekodieren kann.

Die Chipkarte steht dabei mit dem Endgerät über die physikalische Schnittstelle eines Kontaktfelds des Datenträgers in Verbindung. Für ein verwendetes Kommunikationsprotokoll ist jeweils eine individuelle Kontaktbelegung des Kontaktfelds vereinbart, deren Kontakte nicht gleichzeitig für andere Zwecke, z.B. für ein weiteres Kommunikationsprotokoll, zur Verfügung stehen.

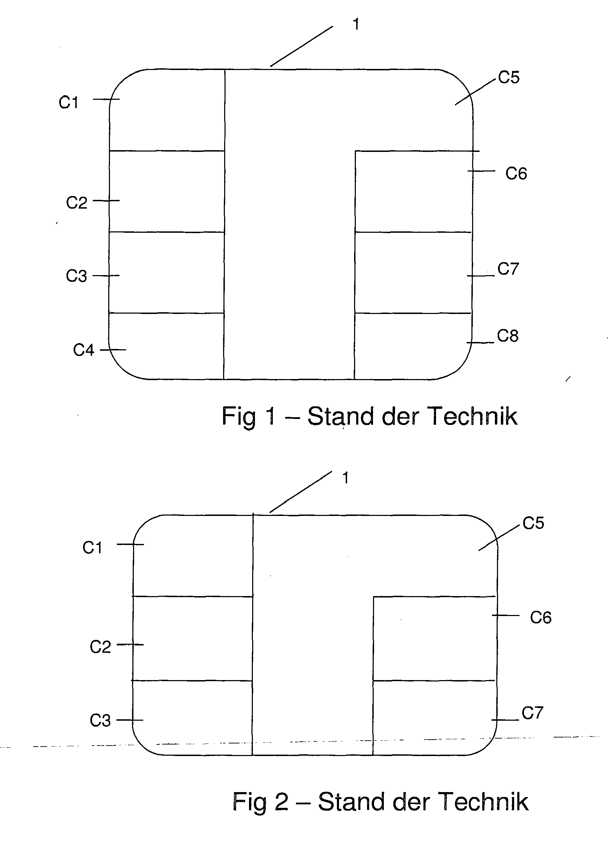

Die Anzahl an Kontaktstellen eines solchen Kontaktfelds und somit die möglichen unterschiedlichen Kontaktbelegungen ist stark begrenzt. Über ein im Chipkartenbereich verwendetes Kontaktfeld gemäß dem ISO 7816-2 Standard mit acht Kontaktstellen C1 bis C8, wie in Figur 1 dargestellt, werden verschiedene Kommunikationsprotokolle für eine kontaktbehaftete Kommunikation (nachfolgend als "kontaktbehaftete Kommunikationsprotokolle" bezeichnet) eingesetzt, beispielsweise das MMC Hochgeschwindigkeitsprotokoll ("Multimedia Card"), das die Kontakte C4, C6 und C8 nutzt, oder das USB - Hochgeschwindigkeitsprotokoll ("Universial Serial Bus"), das die Kontakte C4 und C8 einsetzt (vgl. Dokumente SCPt060551 und SCPt060552 des Europäischen Instituts für Telekommunikationsnormen, ETSI).

Darüber hinaus ist insbesondere aus der WO 2008/058743 A1 auch eine Umterstützung von Kommunikationsprotokollen für eine kontaktlose Kommunikation (nachfolgend als "kontaktlose Kommunikationsprotokolle" bezeichnet), beispielsweise das Single-Wire-Protokoll, kurz SWP bekannt, auf deren gesamte Offenbarung hierin eindeutig Bezug genommen wird. In dieser Offenbarung wird beschrieben, wie eine technisch mögliche kontaktlose Kommunikation durchgeführt werden kann, obwohl zumindest einige Kontakte der zugehörigen Kontaktbelegung von einer bereits aktivierten kontaktbehafteten Kommunikation blockiert werden. Zur Umsetzung dieser Lösung ist allerdings ein ISO-7816-2 Kontaktfeld mit mindestens 8 Kontaktfeldern notwendig.

Durch die zunehmende Miniaturisierung von Endgeräten, insbesondere im Mobilfunksektor, ist es wünschenswert, auch die Teilnehmeridentifikationskarten, kurz SIM-Karten zu verkleinern. Um die Abwärtskompatibilität zu erhalten ist die Barriere für die Miniaturisierung das zu verwendende Kontaktflächenfeld. Daher ist es denkbar, dass für zukünftige Formfaktorstandards für Chipkarten, insbesondere SIM-Karten, kein Kontaktfeld mit acht Kontaktflächen mehr zum Einsatz kommt und auf das in der ISO-7816-2 beschriebene Kontaktfeld mit nur 6 Kontaktflächen zurückgegriffen wird.

In der DE 103 44 852 A1 ist allgemein beschrieben, dass ein Kontaktfeld mit sechs Kontaktflächen dazu verwendet werden könnte, neben einem ISO-Protokoll ein USB- Kommunikationsprotokoll zum Datenaustausch zu verwenden.

Der Erfindung liegt die Aufgabe zugrunde, einen Datenaustausch zwischen einer Chipkarte und einem Endgerät flexibel zu gestalten, wobei die Gesamtfläche des ISO-Standardkontaktfeld mit sechs Kontaktflächen nicht überschritten werden soll. Insbesondere ist es die Aufgabe dieser Erfindung, eine Vielzahl unterschiedlicher kontaktbehafteter und/oder kontaktloser Kommunikationsprotokolle, die wiederum unterschiedliche Kontaktflächenbelegungen benötigen, über ein Kontaktfeld der ISO-Standardgröße für sechs Kontaktflächen für den Datenaustausch verwenden zu können. Weiterhin ist es die Aufgabe eine quasi-parallele Kommunikation zwischen einem Hochgeschwindigkeitsprotokoll mit zwei Datenleitungen, insbesondere USB oder Fire-Wire und einem weiteren kontaktbehafteten oder kontaktlosen Kommunikationsprotokoll zu ermöglichen.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die Aufgabe durch ein Verfahren zum Austausch von Daten zwischen einem Endgerät und einer Chipkarte gelöst, wobei der Datenaustausch zwischen Endgerät und Chipkarte kontaktbehaftet über ein Kontaktfeld mit maximal sechs Kontaktflächen gemäß ISO-7816-2 Standard erfolgt. Das erfindungsgemäße Verfahren umfasst die Schritte: Aktivieren einer ersten Kontaktbelegung in Reaktion auf ein an dem Kontaktfeld anliegenden ersten Kommunikationsprotokoll, wobei das erste Kommunikationsprotokoll eine erste Kombination der sechs Kontaktflächen des Kontaktfelds belegt; Erkennen eines Wechsels des Kommunikationsprotokolls von einem ersten Kommunikationsprotokoll zu einem zweiten Kommunikationsprotokoll durch eine Protokollerkennungseinheit innerhalb der Chipkarte; und Aktivieren einer zweiten Kontaktbelegung in Reaktion auf das erkannte zweite Kommunikationsprotokoll, wobei das zweite Kommunikationsprotokoll eine zweite Kombination der sechs Kontaktflächen des Kontaktfeldes belegt. Das Verfahren zeichnet sich dadurch aus, dass das erste Kommunikationsprotokoll ein vom ISO-7816 Standard verschiedenes, insbesondere ein Kontaktlos-Kommunikationsprotokoll ist; und das zweite Kommunikationsprotokoll ein Kommunikationsprotokoll mit zwei Daterileitungen ist.

Alternativ wird die Aufgabe durch ein Verfahren zum Austauschen von Daten zwischen einem Endgerät und einer Chipkarte gelöst, wobei der Datenaustausch zwischen Endgerät und Chipkarte kontaktbehaftet über ein Kontaktfeld mit maximal sechs Kontaktflächen gemäß ISO-7816-2 Standard erfolgt, mit den Verfahrensschritten: Aktivieren einer dritten Kontaktbelegung in Reaktion auf ein an dem Kontaktfeld anliegenden dritten Kommunikationsprotokoll, wobei das dritte Kommunikationsprotokoll ein Kommunikationsprotokoll gemäß ISO-7816 Standard ist und eine dritte Kombination der sechs Kontaktflächen des Kontaktfelds belegt; Erkennen eines Wechsels des Kommunikationsprotokolls vom dritten Kommunikationsprotokoll zu einem zweiten Kommunikationsprotokoll oder einem ersten Kommunikationsprotokoll durch eine Protokollerkennungseinheit innerhalb der Chipkarte; und Aktivieren einer zweiten Kontaktbelegung in Reaktion auf das erkannte zweite Kommunikationsprotokoll, wobei das zweite Kommunikationsprotokoll eine vierte Kombination der sechs Kontaktflächen des Kontaktfeldes belegt. Das Verfahren kennzeichnet dadurch aus, dass das zweite Kommunikationsprotokoll ein Kommunikationsprotokoll mit zwei Datenleitungen ist; und das erste Kommunikationsprotokolls ein vom ISO-7816 Standard verschiedenes, insbesondere ein KontaktlosKommunikationsprotokoll ist und eine Datenleitung des ersten Kommunikationsprotokolls weder in der dritten Kombination noch in der vierten Kombination der sechs Kontaktflächen des Kontaktfelds verwendet wird.

Insbesondere ist das zweite Protokoll ein Hochgeschwindigkeitsprotokoll, insbesondere USB- oder FireWire.

Insbesondere ist das erste Kommunikationsprotokoll das Single-Wire-, das Bluetooth- , das WiFi- oder ein RFID- Protokoll, sodass mittels kontaktloser Kommunikationsprotokolle mit der Chipkarte kommuniziert werden kann, wobei bei Bedarf in einen Hochgeschwindigkeitskommunikationsprotokoll gewechselt werden kann. Der Begriff Kontaktloskommunikationsprotokoll wird hier derart ausgelegt, dass zumindest ein Teil der Übertragungsstrecke zum Datenaustausch kontaktlos, beispielsweise über eine Nahfeldkommunikationsschnittstelle erfolgt. Der Begriff Kontaktloskommunikationsprotokoll schließt dabei nicht aus, dass ein Teil des Datenaustauschs kontaktbehaftet erfolgt, insbesondere die Umsetzung der Energiesignale aus der Luft in leitungsgebundene Signale zum Anlegen an das Kontaktfeld.
Die Aufgabe wird weiterhin durch eine Chipkarte gelöst, die ein Kontaktfeld gemäß ISO 7816-2 Standard, zumindest zwei Schnittstelleneinheiten zum Datenaustausch mit einem Endgerät gemäß einem entsprechenden Kommunikationsprotokoll über eine entsprechende Kontaktbelegung des Kontaktfelds und eine Protokolleinstelleinheit umfasst. Dabei weisen die zumindest zwei Schnittstelleneinheiten zumindest eine Kontakt-Schnittstelleneinheit zur Kommunikation gemäß einem ersten kontaktbehafteten Kommunikationsprotokoll oder einem zweiten kontaktbehafteten Kommunikationsprotokoll und eine Kontaktlos-Schnittstelleneinheit zur Kommunikation gemäß einem kontaktlosen Kommunikationsprotokoll über eine vorgegebene Kontaktbelegung des Kontaktfelds auf. Die Protokolleinstelleinheit umfasst hierbei eine Protokollerkennungseinheit, wobei die Protokollerkennungseinheit eingerichtet ist, gleichzeitig zu einer bereits in Reaktion auf ein an dem Kontaktfeld anliegendes Kommunikationsprotokoll aktivierten ersten Schnittstelleneinheit eine zweite Schnittstelleneinheit in Reaktion auf ein an dem Kontaktfeld anliegendes zweites Kommunikationsprotokoll zu aktivieren. Das Kontaktfeld ist dabei ein ISO-7816-2 Kontaktfeld mit maximal sechs Kontaktflächen ist und das zweite kontaktbehaftete Kommunikationsprotokoll umfasst mindestens zwei Datenleitungen.

Eine Protokolleinstelleinheit des Datenträgers ist hierbei imstande, Kommunikation über mindestens zwei verschiedene Kommunikationsprotokolle unabhängig ob kontaktlos oder kontaktbehaftet zu ermöglich.

Hierbei ist der Begriff "Kontaktbelegung eines Kommunikationsprotokolls" als diejenige individuelle Gruppe von Kontakten des Kontaktfelds zu verstehen, auf die ein Endgerät bei der Kommunikation mit dem Datenträger über das Kommunikationsprotokoll zugreift. Unter "Aktivieren einer Kontaktbelegung" wird insofern ein Aktivieren derjenigen Schnittstelleneinheit des Datenträgers verstanden, die auf Kontakte des Kontaktfelds zugreift, die die Kontaktbelegung bilden, die zu dem von der Schnittstelleneinheit unterstützten Kommunikationsprotokoll gehört.

Das Wechseln des Kommunikationsprotokolls wird der Chipkarte durch das Endgerät angezeigt. Die Chipkarte erkennt den angezeigten Wechsel in vorteilhafter Weise durch das Überwachen eines Signalpegels auf einer, für das aktivierte erste oder zweite Kommunikationsprotokoll nicht verwendeten Kontaktfläche des Kontaktfeldes mit nur sechs Kontaktflächen. Somit überwacht eine Protokollerkennungseinheit den logischen Signalpegel der nicht verwendeten Kontaktfläche und erkennt einen durch das Endgerät eingeleiteten Signalpegelwechsel.

In einer weiteren Ausgestaltung ist die Chipkarte in der Lage in ein drittes Kommunikationsprotokoll zu wechseln, wodurch eine dritte Kombination der sechs Kontaktflächen des Kontaktfeldes aufgrund des aktivierten dritten Kommunikationsprotokolls belegt wird.

Gemäß der gezeigten Lösung ist somit eine Chipkarte zum Datenaustausch mit einem Endgerät geschaffen, welche sehr flexibel zwischen den verschiedensten kontaktbehafteten und kontaktlosen und kontaktbehafteten Hochgeschwindigkeitsprotokollen wechseln kann. Ein Wechsel von einem vorher aktivierten Protokoll oder einem in der Session noch nicht aktivierten Protokoll ist jederzeit durch entsprechendes endgeräteseitiges Anzeigen möglich.

In einer alternativen Ausgestaltung erkennt die Chipkarte das endgeräteseitige Anzeigen durch Auswerten eines festgelegten Datenpakets innerhalb des jeweilig aktivierten ersten oder zweiten Kommunikationsprotokolls erkennt. Ist ein Kommunikationsprotokoll mit zwei Datenleitungen aktiv kann insbesondere ein endgeräteseitig generierter Signal-Burst auf einer der Datenleitungen anzeigen, dass ein Wechsel des Kommunikationsprotokolls endgeräteseitig gewünscht ist, wodurch eine alternative Kontaktbelegung und Auswertung der Daten auf dem Kontaktfeld eingestellt werden muss.

Alternativ zeigt das Endgerät der Chipkarte den Protokollwechsel an, indem die Spannungsversorgung an einen der Kontaktflächen variiert wird. Eine Variation ist in der Höhe des Spannungspegels, einer Modulation der Spannung, beispielsweise ASK, FSK etc möglich.

Alternativ zeigt das Endgerät der Chipkarte den Protokollwechsel durch eine Signalpegeländerung an, die gemäß des gegenwärtig aktivierten Kommunikationsprotokolls eine Pegelverletzung darstellt, also entweder außerhalb zulässiger Toleranzen der Höhe ist oder Datenwörter beinhaltet, die in dem Kommunikationsstandard nicht erlaubt sind.

Alternativ ist das Verändern der Taktfrequenz an einer Kontaktfläche das Erkennungsmerkmal für die Chipkarte, das Kommunikationsprotokoll zu wechseln.

Das erfindungsgemäße Verfahren ist bevorzugt bei Teilnehmeridentifikationskarten während eines Datenaustauschs mit einem mobilen Kommunikationsendgerät als Endgerät für den Betrieb in einem mobilen Kommunikationsnetz anzuwenden, da speziell bei den Kommunikationsendgeräten, beispielsweise Mobiltelefone, PDA, Smartphones, Handhelds etc eine verkleinerte Variante der Chipkarte zu erwarten ist, um mehr Platz für zusätzliche Funktionalität innerhalb des Kommunikationsendgeräts zu erhalten.

Das zweite Kommunikationsprotokoll ist insbesondere das Universal Serial Bus Protokoll. Dieses Protokoll benötigt neben der Spannungsversorgung +5V an Kontaktfläche C1 und Ground an Kontaktfläche C5 noch zwei Datenleitungen D+ und D-, die bislang über die Kontaktflächen C4 und C8 des ISO-Standardkontaktfeldes gesteuert wurden.

Bei dem erfindungsgemäßen Verfahren wird das USB Kommunikationsprotokoll nun über das Kontaktfeld mit nur sechs Kontaktflächen angesteuert, indem die Spannungsversorgung und die Masseversorgung wie bislang über die Kontaktflächen C1 und C5 angesteuert werden, wohingegen die zwei Datenleitungen D+ und D- über die Kontaktflächen C6 und C7 abzugreifen sind. Dies bedingt, dass ein zeitgleicher Datenaustausch zwischen Chipkarte und Endgerät über das ISO Standardprotokoll mit C7 als I/O Datenleitung nicht mehr möglich ist. Ein Wechsel des Kommunikationsprotokolls von USB auf ISO oder SWP wird nun entweder über die Taktleitung C3 vom Endgerät angezeigt und von der Chipkarte erkannt oder mittels eines USB-Datenpakets in der Protokolleinstelleinheit erkannt.

Alternativ wird bei dem erfindungsgemäßen Verfahren das USB Kommunikationsprotokoll nun über das Kontaktfeld mit nur sechs Kontaktflächen angesteuert, indem die Spannungsversorgung und die Masseversorgung wie bislang über die Kontaktflächen C1 und C5 angesteuert werden, wohingegen die zwei Datenleitungen D+ und D- über je eine der drei Kontaktflächen C2, C3, C7 abzugreifen sind. Dadurch wird das Erkennen des ersten Protokolls, insbesondere eines Kontaktlos-Kommunikationsprotokolls SWP, über die Datenleitung C6 weiterhin möglich sein.
Bei der Belegung des Kontaktfeldes werden drei Arten von Leitungen an das Kontaktfeld angelegt. Zum einen sind das Versorgungsleitungen, durch die elektrische Versorgungsspannung an das Kontaktfeld angelegt wird. Insbesondere C1 und C5 sind als Versorgungsspannungsleitungen zu verwenden.

Diese Versorgungsspannungsleitungen sind bevorzugt für jedes anzulegende Kommunikationsprotokoll gleich, sodass die Chipkarte stets mit Energie versorgt wird und auch beim Wechsel zwischen den Protokollen kein Versorgungsspannungsverlust auftritt. Weiterhin sind Datenleitungen vorgesehen, die für den eigentlichen Datenaustausch vorgesehen sind. Diese Datenleitungen variieren auf dem Kontaktfeld in Abhängigkeit des anzulegenden Protokolls. Als letzte Art sind Steuerleitungen vorgesehen, die den Datenaustausch steuern, beispielsweise ein Taktsignal oder ein Resetsignal.

Insbesondere wird zumindest eine Steuerleitung des dritten Kommunikationsprotokolls in dem ersten Kommunikationsprotokoll oder zweiten Kommunikationsprotokoll zusätzlich zu den gemäß ersten Kommunikationsprotokoll oder zweiten Kommunikationsprotokoll benötigten Leitungen verwendet. Das heißt, dass während des Betriebs in dem zweiten Protokoll zusätzlich eine Steuerleitung aus einem ersten oder dritten Protokoll an das Kontaktfeld angeschlossen ist, durch das der Datenaustausch weiter beeinflusst werden kann. Insbesondere durch die Verwendung eines Taktsignals als Steuersignal aus dem dritten Protokoll während des Betriebs im ersten oder zweiten Protokoll, bei dem grundsätzlich kein Taktsignal vorgesehen ist, ist ein stabiler Takt in der Chipkarte vorhanden, wodurch zuverlässiges Zeitmanagement der Kommandos erhalten bleibt.

Alternativ wird das Reset-Signal als Steuersignal aus dem dritten Protokoll während des Betriebs im ersten oder zweiten Protokoll, bei dem grundsätzlich kein-Resetsignal vorgesehen ist, verwendet, um einen zuverlässigen Hardware-Reset in der Chipkarte durchführen zu können.

Die Protokolleinstelleinheit ist bevorzugt eine Teilkomponente der auf dein Halbleiterchips eingebrachten zentralen Recheneinheit CPU. Sie kann als eine Hardwareeinheit ausgestaltet sein oder ist Teil des Betriebssystems OS der Recheneinheit.

In einer bevorzugten Ausgestaltung wird jedes ankommende Datenpaket, unabhängig vom aktivierten Kommunikationsprotokoll hinsichtlich eines Kommunikationswechsels analysiert.

Die Protokolleinstelleinheit weist eine Protokollerkennungseinheit auf die die an die jeweiligen Kontaktflächen des Kontaktfelds angelegten Signale überwacht und den Protokollwechsel erkennt. Dabei können die Signale aller Kontaktflächen überwacht werden oder nur diejenigen Kontaktflächen, über die ein Protokollwechsel angezeigt werden kann. Wurde ein Protokollwechsel erkannt, sorgt die Protokolleinstelleinheit dafür, dass die nun geforderten Kontaktflächen aktiviert werden.

Falls die Protokollsteuereinheit nach dem Einschalten des Datenträgers ein an dem Kontaktfeld anliegendes kontaktbehaftetes ISO- Kommunikationsprotokoll erkennt, dessen Kontaktbelegung die Kontaktflächen C2, C3 und C7 umfasst, kann eine ISO-Schnittstelleneinheit als erste Kontakt- Schnittstelleneinheit und beispielsweise die SWP- Schnittstelleneinheit mit dem Kontakt C6 als Kontaktlos-Schnittstelleneinheit aktiviert werden. Die Steuereinheit erkennt das ISO- Kommunikationsprotokoll beispielsweise daran, dass an dem Kontakt C3 ein Taktsignal anliegt und ein an dem Kontakt C2 anliegender logischer Spannungspegel im Rahmen einer normalen Initialisierungssequenz der ISO- Schnittstelleneinheit von "niedrig" nach "hoch" bzw. 0 nach 1 geändert wird. Die Protokollsteuereinheit aktiviert dann die Kontakte C2, C3 und C7 für das ISO- Kommunikationsprotokoll.

Die vorliegende Erfindung ermöglicht, das kontaktlose SWP- Protokoll über den C6-Kontakt gleichzeitig mit zumindest einem kontaktbehafteten Kommunikationsprotokoll zu betreiben, z.B. mit dem ISO-Protokoll (über C2, C3, C7). Alternativ ist es möglich zwischen dem kontaktlose SWP- Protokoll über den C6-Kontakt mit entweder einem kontaktbehafteten Hochgeschwindigkeitskommunikationsprotokoll zu betreiben, z.B. USB- Protokoll über die vierte Kombination über C1, C2, C3, C5, C7 oder einem kontaktbehafteten Protokoll, z.B. ISO- Protokoll über die dritte Kombination über C1, C2, C3, C5, C7. Neben der kontaktlosen Nahfeldkommunikation über das SWP- Protokoll können auch andere Funkkommunikationen in die vorliegende Erfindung integriert werden, z.B. Kommunikationsprotokolle für RFID ("Radio Frequency Identification"), BlueTooth, WiFi ("Wireless Fidelity") und dergleichen, die wiederum individuelle Kontaktbelegungen des Kontaktfelds gemäß ISO 7816-2 verwenden können.

In einer bevorzugten Ausgestaltung wird das dritte Kommunikationsprotokoll an der Chipkarte erkannt und gemäß einer dritten Kontaktbelegung verwendet. Wird nun die Kommunikation mit einem Hochgeschwindigkeitsprotokoll gewünscht, wird dieses endgeräteseitig gemäß ETSI TS 102 600 Version 10.0.0 Punkt 7.2 angelegt, wobei anstelle der Kontakte C4 und C8 nun zwei der Kontakte C2, C3 oder C7 verwendet werden. Der Kontakt C6 ist in dieser Ausgestaltung für das SWP-Signal reserviert.

In einer weiteren Ausgestaltung erkennt die Protokollsteuereinheit anhand einer an den Kontaktflächen C6 und C7 anliegenden geringen oder Nullspannung, dass entweder kein kontaktbehaftetes Kommunikationsprotokoll oder das kontaktbehaftete USB- Hochgeschwindigkeitsprotokoll anliegt. Die entsprechende USB Schnittstelleneinheit innerhalb der Protokolleinstelleinheit auf der Chipkarte kann also sowohl als erste als auch als zweite Kontakt- Schnittstelleneinheit aktiviert werden. Dadurch ist es möglich zu einem ersten Zeitpunkt Daten mittels USB Protokoll auszutauschen und zu einem zweiten Zeitpunkt Daten mittels SWP oder ISO auszutauschen. Dabei ist es zu keinem Zeitpunkt möglich gleichzeitig, d.h. quasi-parallel Daten über USB und ISO bzw. SWP zu übertragen.

Die Erfindung ist bevorzugt für den Einsatz bei einem portablen Datenträger mit einem Kontaktfeld gemäß ISO 7816-2 zur Realisierung des kontaktlosen SWP-Protokolls neben anderen gängigen kontaktbehafteten Kommunikationsprotokollen, insbesondere USB und ISO, geeignet.

In einer Ausgestaltung der Erfindung ist weiterhin vorgesehen, dass auf der Grundfläche des ISO-7816-2 Kontaktfeldes für sechs Kontaktflächen noch eine einzige weitere Kontaktfläche C9 vorgesehen ist. Durch diese Ausgestaltung ist es möglich eine flexibleren Wechsel zwischen den kontaktbehafteten und kontaktlosen Kommunikationsprotokollen umzuschalten und eine quasi-parallelen Datenaustausch zwischen einem Kommunikationsprotokoll mit zwei Datenleitungen und einem Kommunikationsprotokoll mit einer einzelnen Datenleitung durchzuführen, wobei die Grundfläche des Kontaktfeldes der Grundfläche des ISO-7816-2 Kontaktfeldes mit maximal sechs Kontaktflächen entspricht.

Insbesondere ist das siebente Kontaktfeld C9 ebenfalls mit der Protokollerkennungseinheit verbunden und kann dadurch ebenfalls zum Erkennen von einem endgeräteseitig angezeigten Protokollwechsel verwendet werden.

In einer bevorzugten Ausgestaltung ist die siebente Kontaktfläche C9 für eine Datenleitung der zwei Datenleitungen des zweiten kontaktbehafteten Kommunikationsprotokolls (beispielsweise USB) vorgesehen. Zusätzlich kann nun an der Kontaktfläche C7 die Protokollerkennungseinheit angeschlossen sein, wobei die Protokollerkennungseinheit erkennt, ob die Kontaktfläche C7 für die zweite Datenleitung der zwei Datenleitungen des zweiten kontaktbehafteten Kommunikationsprotokolls oder für eine Datenleitung des ISO-Kommunikationsprotokolls zu aktivieren ist. Somit ist über die Kontaktfläche C6 (SWP) und die Kontaktflächen C7 und C9 (USB) eine quasi-parallele Kommunikation zwischen einem Hochgeschwindigkeitsprotokoll und einem kontaktlosen Protokoll möglich, wobei die Grundfläche des Kontaktfeldes einem Kontaktfeld mit sechs Kontaktflächen entspricht. Alternativ wird hiermit zwischen ISO (über C7) und SWP (über C6) ein quasi-parallele Datenaustausch ermöglicht.

In einer alternativen Ausgestaltung ist die siebente Kontaktfläche C9 für eine Datenleitung der zwei Datenleitungen des zweiten kontaktbehafteten Kommunikationsprotokolls vorgesehen. Über Kontaktfläche C7 wird nun das ISO-7816 Standard Protokoll vorgesehen. An der Kontaktfläche C6 ist die Protokollerkennungseinheit angeschlossen, wobei die Protokollerkennungseinheit erkennt, ob die Kontaktfläche C6 für die zweite der zwei Datenleitungen des zweiten kontaktbehafteten Kommunikationsprotokolls oder für das SWP- Kommunikationsprotokoll zu aktivieren ist. Somit ist über die Kontaktfläche C7 (ISO) und die Kontaktflächen C6 und C9 (USB) eine quasi-parallele Kommunikation zwischen einem Hochgeschwindigkeitsprotokoll und einem kontaktbehafteten Protokoll möglich, wobei die Grundfläche des Kontaktfeldes einem Kontaktfeld mit sechs Kontaktflächen entspricht. Alternativ wird hiermit ebenfalls zwischen ISO und SWP ein quasi-parallele Datenaustausch ermöglicht.

Somit ist mit der Verwendung einer Chipkarte mit diesem Verfahren eine quasi-parallele kontaktbehaftete Kommunikation gemäß dem ISO-Protokoll (C2, C3, C7), gemäß dem USB- Protokoll (C6, C7, C9) und eine kontaktlose Kommunikation gemäß dem SWP- Protokoll (C6) möglich.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Ein ISO 7816-2 Kontaktfeld mit 8 Kontaktflächen gemäß dem Stand der Technik
- Figur 2: Ein ISO 7816-2 Kontaktfeld mit 6 Kontaktflächen gemäß dem Stand der Technik
- Figur 3: Ein erfindungsgemäßes Kontaktfeld mit 7 Kontaktflächen
- Figur 4: Eine Chipkarte mit einer erfindungsgemäßen Protokollsteuereinheit
- Figur 5: Eine erfindungsgemäße Kontaktbelegung zum Austausch von Daten zwischen Chipkarte und einem Endgerät mit einem 6 Kontaktflächenkontaktfeld gemäß Figur 2
- Figur 6: Eine erfindungsgemäße Kontaktbelegung zum Austausch von Daten zwischen Chipkarte und einem Endgerät mit einem 7 Kontaktflächenkontaktfeld gemäß Figur 3
- Figur 7: Eine erfindungsgemäße Kontaktbelegung zum quasiparallelen Austausch von Daten über ein Hochgeschwindigkeitskommunikationsprotokoll und einem kontaktlosen Kommunikationsprotokoll
- Figur 8: Eine erfindungsgemäße Kontaktbelegung zum quasiparallelen Austausch von Daten über ein Hochgeschwindigkeitskommunikationsprotokoll und einem kontaktbehafteten Kommunikationsprotokoll
- Figur 9: Eine zu Figur 5 alternative erfindungsgemäße Kontaktbelegung zum Austausch von Daten zwischen Chipkarte und einem Endgerät mit einem 6 Kontaktflächenkontaktfeld gemäß Figur 2
- Figur 10: Eine zu Figur 9 alternative erfindungsgemäße Kontaktbelegung zum Austausch von Daten zwischen Chipkarte und einem Endgerät mit einem 6 Kontaktflächenkontaktfeld gemäß Figur 2

Figur 1 zeigt ein, aus dem Stand der Technik bekanntes Kontaktfeld 1 gemäß ISO 7816-2 Standard mit den Kontaktflächen C1 bis C8 zum Austausch von Daten zwischen einer Chipkarte und einem Endgerät. Dabei wird an die Kontaktfläche C1 die Spannungsversorgung, an die Kontaktfläche C2 das Reset-Signal, an die Kontaktfläche C3 das Taktsignal, an die Kontaktfläche C5 das Massesignal, an die Kontaktfläche C6 eine Programmierspannung Vpp oder ein Kontaktlos-Kommunikationsprotokoll, insbesondere das SWP-Datensignal, an die Kontaktfläche C7 das Datensignal gemäß ISO-Standard angelegt. Die Kontakte C4 und C8 sind reserviert für zusätzliche Kommunikationsprotokolle, wie bspw. USB oder MMC Kommunikation. Das Betreiben einer Chipkarte mit einem 8 Kontaktflächen Kontaktfeld gemäß Figur 1 ist insbesondere der WO 2008/058743 A1 zu entnehmen.

Mit zunehmender Miniaturisierung besteht das Bedürfnis, die Chipkarten weiter zu verkleinern. Um abwärtskompatibel zu bleiben ist das Minimum an Flächengröße für eine Chipkarte, eine Chipkarte mit einem Kontaktfeld 1 mit sechs Kontaktflächen gemäß der Figur 2. Dabei entspricht das Kontaktfeld 1 der Figur 2 dem Kontaktfeld 1 der Figur 1, wobei auf die Kontaktflächen C4 und C8 verzichtet wird. Dadurch wird das Kontaktfeld 1 um genau diese beiden Kontaktflächen C4 und C8 kleiner.

Bei der Vielzahl von heute eingesetzten bzw. wünschenswerten Kommunikationsprotokollen besitzt das Kontaktfeld 1 mit sechs Kontaktflächen gemäß ISO 7816 nicht genug einzelne Kontakte, um beliebige Kommunikationsprotokolle gleichzeitig betreiben zu können.

Das Problem bei derartigen Kontaktfeldern 1 mit nur sechs Kontaktflächen, ist die fehlende Möglichkeit des Umschaltens zwischen Hochgeschwindigkeitsprotokollen und den (mehreren) gängigen ISO bzw. SWP Protokollen.

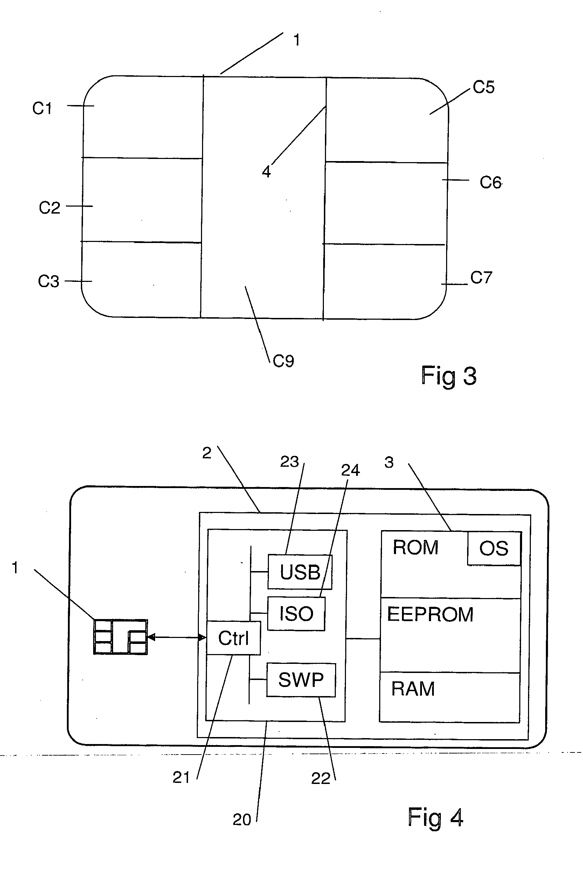

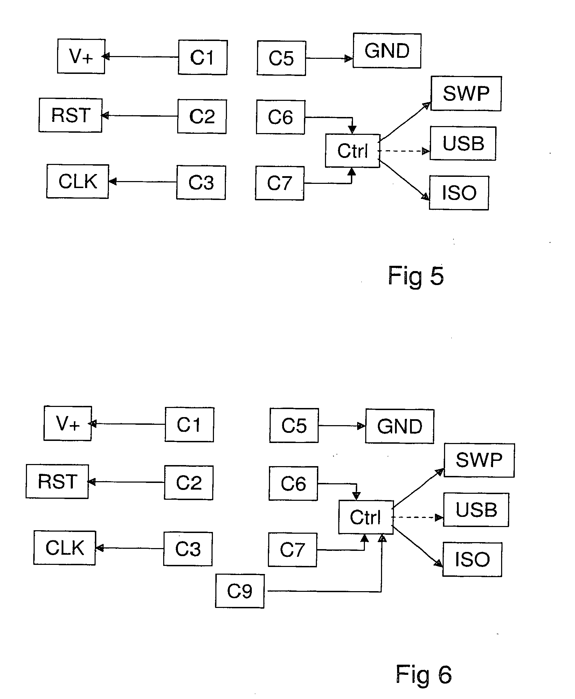

In Figur 3 ist ein erfindungsgemäßes Kontaktfeld 1 mit 7 Kontaktflächen C1, C2, C3, C5, C6, C7 und C9. Die Funktion und die erfindungsgemäße Beschaltung werden in der Figur 6 bis 8 erläutert. Die siebenten Kontaktfläche ist bevorzugt aus der Kontaktfläche C5 der ISO 7816-2 Standard Kontaktfläche getrennt, beispielsweise durch ein Trennen der Kontaktfläche C5 im Bereich 4. Dadurch ist das im Inneren des Kontaktfeldes 1 der Figur 3 eine weitere Kontaktfläche C9 erhalten, wobei eine Abwärtskompatibilität zu älteren Kontaktfeldanschlüssen in einem Endgerät weiterhin gegeben ist. Alternativ kann die siebente Kontaktfläche C9 auch an einer anderen Stelle angeordnet sein. Es sei hier ausdrücklich darauf hingewiesen, dass die Gesamtgröße des Kontaktfeldes 1 mit sieben Kontaktflächen die Größe gemäß ISO 7816-2 Standard für ein Kontaktfeld mit sechs Kontaktflächen nicht übersteigt.

In Figur 4 ist eine erfindungsgemäße Chipkarte mit einem Kontaktfeld mit sechs Kontaktflächen beschrieben. Diese Chipkarte weist eine Protokolleinstelleinheit auf, die insbesondere dafür vorgesehen, bei Chipkarten, Smart Cards, Mobilfunkkarten und dergleichen über individuelle Kontaktbelegungen physikalische Schnittstellen für verschiedene Kommunikationsprotokolle bereitzustellen. Abhängig von dem jeweiligen Kommunikationsprotokoll ISO, SWP, USB, das ein mit der Chipkarte in Kontakt stehendes Endgerät, beispielsweise ein Mobiltelefon, ein Bankterminal oder eine sonstige stationäre oder portable elektronische Kommunikationsvorrichtung, in einer Initialisierungs- oder Startphase der Chipkarte vorgibt, werden bestimmte Kontaktbelegungen für die jeweiligen Kommunikationsprotokolle verwendet. Die Kommunikation wird dann von einer entsprechenden Schnittstelleneinheiten 22 bis 24 über aktivierte Kontaktbelegungen durchgeführt.

Die Chipkarte umfasst eine zentrale Recheneinheit (CPU) 2, der ein Betriebssystem (OS) im Speicherbereich 3 der Chipkarte und weitere Applikationen, z.B. die Schnittstelleneinheit 22-24, ausführt, sowie einen Speicherbereich 3, bestehend aus einem permanenten ROM-Speicher, einen nichtflüchtigen EEPROM-Speicher und einem flüchtigen RAM-Arbeitsspeicher.

Ein gängiges Kommunikationsprotokoll für die Kommunikation über ein Kontaktfeld gemäß ISO 7816-2 ist das von einer ISO-Schnittstelleneinheit 24 bereitgestellte kontaktbehaftete ISO-Kommunikationsprotokoll, dessen Kontaktbelegung die Kontakte C1, C2, C3, C5 und C7 umfasst.

Darüber hinaus werden zunehmend die kontaktbehafteten Hochgeschwindigkeitsprotokolle FireWire und USB ("Universal Serial Bus") eingesetzt, deren entsprechende Schnittstelleneinheit 24 eine Kommunikation über das USB- Protokoll über die Kontakte C1, C5, C6 und C7 erfindungsgemäß vorgesehen ist.

Neben diesen auf eine kontaktbehaftete Kommunikation abgestimmten Protokollen werden bei Chipkarten auch zunehmend Kommunikationsprotokolle für eine kontaktlose Kommunikation eingesetzt, die weitere Kontaktbelegungen des Kontaktfelds gemäß ISO 7816-2 beanspruchen. In diesem Zusammenhang sind insbesondere solche Kommunikationsprotokolle zu nennen, die bei der Nahfeldkommunikation der Chipkarte mit einem Endgerät über Funk- bzw. Hochfrequenzsignale eingesetzt werden.

Beispielhaft für derartige kontaktlose Kommunikationsprotokolle wird nachfolgend von dem SWP-Protokoll ausgegangen, das den Kontakt C6 nutzt. Das erfindungsgemäße Prinzip kann aber unmittelbar auf jedes andere kontaktlose Kommunikationsprotokoll übertragen werden, über das ein portabler Datenträger, wie z. B. einer Chipkarte oder Smart Card, eine kontaktlose Kommunikation mit einem Endgerät, Terminal oder einer sonstigen Kommunikationseinrichtung durchführen kann. So können beispielsweise auch andere kontaktlose Kommunikationsprotokolle eingesetzt werden, z.B. solche, die auf eine Funkkommunikation über eine BlueTooth-Schnittstelle, über die WiFi-Technologie ("Wireless Fidelity") oder über RFID ("Radio Frequency Identification") abgestimmt sind. Diese Kontaktlos- Kommunikationsprotokolle können mit der Schnittstelleneinheit 22 eingestellt werden.

Um eine möglichst hohe Verfügbarkeit der Chipkarte im Hinblick auf eine kontaktlose Nahfeldkommunikation über das SWP-Protokoll sicherzustellen und zu ermöglichen, dass eine kontaktlose Kommunikation gemäß dem SWP-Protokoll gleichzeitig mit zumindest einer kontaktbehafteten Kommunikation gemäß einem der kontaktbehafteten Protokolle ausgeführt werden kann, umfasst die Chipkarte eine Protokollsteuereinheit Ctrl 21, die eine an einzelnen Kontakten des Kontaktfelds 1 anliegende Spannung prüft und daraus eines oder mehrere durch Endgeräte/Terminals vorgegebene Kommunikationsprotokolle ermittelt. Auf diese Weise erkennt die Protokollsteuereinheit 21 mögliche Wechsel des Kommunikationsprotokolls bezüglich einzelner von verschiedenen Schnittstelleneinheiten 22, 23 und 24 verwendeten Kontaktflächen des Kontaktfelds 1 und aktiviert die entsprechenden Kontaktbelegungen so, dass neben einer aktiven Schnittstelleneinheit 23, 24 zur kontaktbehafteten Kommunikation zumindest auch eine Schnittstelleneinheit 22 zur kontaktlosen Kommunikation aktiv sein kann.

Dadurch wird insbesondere erreicht, dass der Kontakt C6, der von der SWP-Schnittstelleneinheit 22 zur Nahfeldkommunikation benötigt wird, für das SWP-Protokoll zur Verfügung steht. Die Protokollsteuereinheit 20 ermöglicht, dass die Chipkarte neben der SWP- Schnittstelleneinheit 22 mit zumindest einer der in Figur 1 gezeigten USB-, oder ISO-Schnittstelleneinheit 23, 24 betrieben werden kann und sie von der Protokollsteuereinheit 20 gegenüber einer zweiten zu aktivierenden Kontakt-Schnittstelleneinheit 23, 24 bevorzugt werden könnte.

Eine Kollisionsprüfung und kontrollierte Aktivierung durch die Protokollsteuereinheit 20 kann im Rahmen der Hochfahr-/Initialisierungssequenz beim Einschalten der Chipkarte erfolgen, indem eine adaptive Takterkennung an den Kontakten C3 und C6 durchgeführt wird, um zu ermitteln, ob an einem dieser Kontakte C3 und C6 ein Taktsignal anliegt. Hierbei stellt das Endgerät/Terminal, das mit der Chipkarte verbunden ist, sicher, dass in dieser Phase nur einer der beiden Kontakte C3 oder C6 ein Taktsignal führt und der andere einen konstanten Spannungspegel hat.

Ein anliegendes ISO-Kommunikationsprotokoll wird von der Protokollerkennungseinheit 21 in der Protokollsteuereinheit 20 an einem am Kontakt C3 anliegenden Taktsignal und einer Änderung des Spannungspegels am Kontakt C2 von 0 (niedrig) auf 1 (erhöht) im Rahmen der Initialisierungssequenz des ISO-Protokolls erkannt. Die Protokollsteuereinheit 20 aktiviert dann die ISO-Schnittstelleneinheit 24 mit dem Kontakt C3 für den Takt (CLK), C2 für eine Reset-Leitung (RST) und C7 für eine Ein-/Ausgangsdatenleitung (I/O).

In Figur 5 ist eine beispielhafte Beschaltung des Kontaktfeldes 1 mit den Kontaktflächen C1, C2, C3, C5, C6 und C7 für das erfindungsgemäße Verfahren dargestellt. Dabei sind die Kontaktflächen C6 und C7 mit der Protokollerkennungseinheit 21 verbunden. Die Protokollerkennungseinheit 21 schaltet in Abhängigkeit der an das Kontaktfeld 1 angelegten Signale entweder die Schnittstelleneinheit 22, 23 oder 24 und entsprechend die Kontaktflächenbelegung gemäß der Kommunikationsprotokolle USB, ISO oder SWP an das Kontaktfeld 1. Dazu ist in Figur 5 der Betrieb der ISO-Schnittstelleneinheit 24, der USB- Schnittstelleneinheit 23 sowie der SWP- Schnittstelleneinheit 22 gezeigt. Das USB- Protokoll führt bei seiner Initialisierungssequenz auf C6 und C7 eine Nullspannung, durch die das USB- Protokoll von dem SWP und dem ISO Protokoll unterschieden werden kann. Durch die Nullspannung auf C6 und/oder C7 oder durch spezielle USB- Initialisierungssignale auf C6 (D+) oder C7 (D-) im Rahmen der USB- Initialisierungssequenz wird ein an dem Kontaktfeld 1 anliegendes USB- Protokoll von der Protokollerkennungseinheit 21 erkannt und dadurch die USB- Schnittstelleneinheit 23 aktiviert. Da die Kontaktbelegung der USB- Schnittstelleneinrichtung 23 mit den ISO und SWP- Schnittstelleneinheiten 22 und 24 kollidiert, ist eine Umschaltung zu den ISO oder SWP Protokollen nur über festgelegte Datenpakete oder die Beschaltung der Kontaktfläche C3 Reset oder C2 CLK möglich. Einige Beispiele zur Protokollumschaltung:

Da im USB Betrieb die Kontakte C1, C5, C6 und C7 belegt sind, könnte ein Protokollwechsel über einen Signalpegelwechsel an C2 oder C3 angezeigt werden. Erkennt die Chipkarte einen angezeigten Wechsel, so kann sie den Betrieb von USB-Protokoll auf einen SWP und ISO-Protokoll Betrieb umschalten. Die Protokolleinstelleinheit 20 legt die dafür notwendigen Schnittstelleneinheiten an. Die Kontaktfläche C6 ist dann für den Input der SWP Daten vorgesehen, C7 für den Input/Output von Daten aus dem ISO-Protokoll. C1 und C5 dienen weiterhin der Versorgungsspannung, C2 wird Reset und der Versorgungstakt CLK an C3 angelegt.

Alternativ kann ein Signal-Burst, beispielsweise eine Sequenz aus schnellen Flankenwechsel der Signale an den C6 und C7 Kontakten, die der Protokollerkennungseinheit den Wechsel anzeigen.

Alternativ wird ein festgelegten bzw. vordefinierten USB- Datenpaket verwendet, beispielsweise eine Folge bestimmter Datenworte, die der Chipkarte anzeigen, dass vom USB- Hochgeschwindigkeitsmodus in den ISO/SWP Modus umzuschalten ist. Insbesondere wird zwischen einem SWP und dem USB Modus umgeschaltet.

Alternativ wird ein Spannungsbereich bei den Datenleitungen und/oder Versorgungsspannungsleitungen verwendet, der gemäß dem jeweiligen Protokoll eine Pegelverletzung darstellt und durch den das Endgerät der Protokolleinstelleinheit 20 den Wechsel zu einem anderen Protokoll anzeigt.

Ein an dem Kontaktfeld 1 anliegendes SWP- Protokoll ist grundsätzlich anhand einer Spannungsmodulation an dem Kontakt C6 erkennbar, da im Gegensatz zu den ansonsten am Kontakt C6 anliegenden Datensignalen von kontaktbehafteten Protokollen, wie z.B. dem Datensignal D+ oder D- des USB- Protokoll, das SWP- Signal pulsbreiten-moduliert und insofern von einem USB Datensignal D+ oder D- unterscheidbar ist. Auf diese Weise kann die Protokollsteuereinheit 20 eine ausschließliche Aktivierung der SWP- Schnittstelleneinheit 22 vornehmen. Der Halbleiterchip kann dabei weiterhin mit C1 und C5 spannungsversorgt werden. Alternativ kann die für die Auswertung der SWP Daten benötigte auch über eine NFC- Stromversorgung der Chipkarte erfolgen, sollte diese über einen Nahfeldkommunikations-Controller verfügen.

In Figur 6 ist ein Beschaltungsbeispiel für eine Chipkarte dargestellt. Die Figur 6 entspricht in weiten Teilen dem Beschaltungsbeispiel der Figur 5, sodass im Folgenden nur auf die Unterschiede zwischen Figur 5 und Figur 6 hingewiesen wird. Für Figur 6 ist die Beschaltung eines in Figur 3 dargestellten Kontaktfelds 1 mit sieben Kontaktflächen gezeigt. Diese siebente Kontaktfläche C9 ist ebenfalls mit der Protokollerkennungseinheit 21 verbunden.

Die USB- SWP- und die ISO-Schnittstelleneinheiten 23, 22, 24 können nunmehr gleichzeitig aktiviert sein, da über diese drei Dateneingänge C6, C7 und C9 die Schnittstelleneinheiten 22, 23, 24 USB an zwei Datenleitungen und eine zusätzliche Schnittstelleinheit ISO oder USB an der Chipkarte angelegt werden können.

Durch den in Figur 6 dargestellten quasi-parallelen Betrieb eines Hochgeschwindigkeitsprotokolls (USB oder FireWire) und einem weiteren Protokoll (entweder ISO oder SWP) ist trotz der Miniaturisierung der Chipkarte auf die ISO-7816-2 Kontaktfeldgröße für sechs Kontaktflächen ein sehr flexibler Datenaustausch zwischen Chipkarte und Endgerät ermöglicht.

Insbesondere ist ein quasi-paralleler Betrieb zwischen USB und SWP anzustreben, da die Daten über eine Kontaktlos-Schnittstelleneinheit meist zeitkritischen Randbedingungen unterliegen. Für eine Transaktion mittels SWP stehen wenige 100ms zur Verfügung.

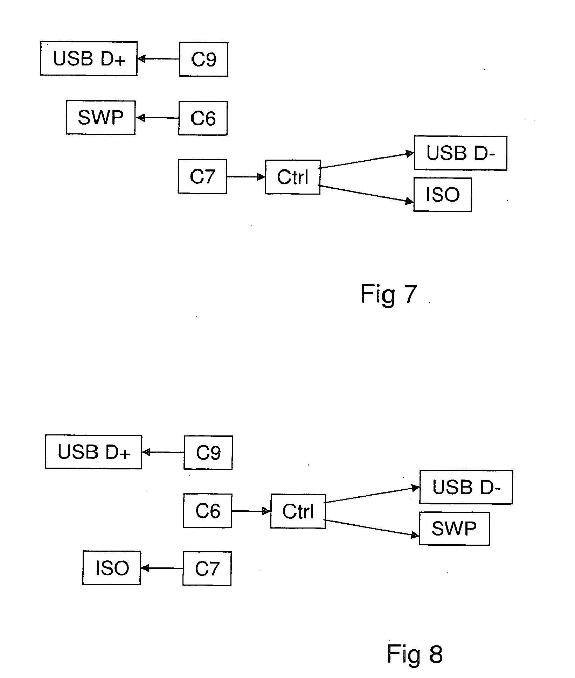

In der Figur 7 ist ein weiteres Beschaltungsbeispiel der Erfindung zur Beschaltung eines Kontaktfeldes 1 mit sieben Kontaktflächen gezeigt. Hier wird im Unterschied zu Figur 6 das Kontaktlos-Protokoll SWP an C6 nicht mehr über die Protokollerkennungseinheit 21 überwacht, sondern ein SWP Datensignal vom Endgerät wird direkt zur Chipkarte an den Kontakt C6 geschalten. Der Kontakt C9 ist ebenfalls nicht über die Protokollerkennungseinheit 21 geschaltet sondern es ist direkt für eine Datenleitung D+ (oder D-) des Hochgeschwindigkeitsprotokolls USB reserviert. Nur an Kontaktfläche C7 ist die Protokollerkennungseinheit 21 angeschlossen, wobei diese Einheit 21 entweder die zweite Datenleitung D- (oder D+) des Hochgeschwindigkeitsprotokolls oder die Datenleitung des ISO 7816 Protokolls über die Schnittstelleneinheiten 23 und 24 an die Kontaktfläche C7 angeschaltet wird.

Durch diese Beschaltung der Figur 7 ist das Kontaktlos- Kommunikationsprotokoll, insbesondere SWP, standardmäßig für die Chipkarte verfügbar, um Daten auszutauschen. Über die Kontaktfläche C7 zeigt das Endgerät der Chipkarte zusätzlich an, ob ein Datenaustausch über ein Hochgeschwindigkeitsprotokoll, insbesondere USB oder Firewire, über die Kontakte C7 und C9 erfolgt bzw. das ISO Standardprotokoll am Kontaktfeld C7 angelegt ist. Die übrigen Kontakte C2, C3 sind gemäß ISO Standard verschaltet.

In der Figur 8 ist ein weiteres Beschaltungsbeispiel der Erfindung zur Beschaltung eines Kontaktfeldes 1 mit sieben Kontaktflächen gezeigt. Hier wird im Unterschied zu Figur 7 das kontaktbehaftete Protokoll ISO an C7 nicht mehr über die Protokollerkennungseinheit 21 überwacht, sondern ein ISO Datensignal vom Endgerät wird direkt zur Chipkarte an den Kontakt C7 geschalten. Der Kontakt C9 ist ebenfalls nicht über die Protokollerkennungseinheit 21 geschaltet sondern es ist direkt für eine Datenleitung D+ (oder D-) des Hochgeschwindigkeitsprotokolls USB reserviert. Nur an Kontaktfläche C6 ist die Protokollerkennungseinheit 21 angeschlossen, wobei diese Einheit 21 entweder die zweite Datenleitung D- (oder D+) des Hochgeschwindigkeitsprotokolls oder die Datenleitung des SWP Kontaktlos-Protokolls über die Schnittstelleneinheiten 22 und 23 an die Kontaktfläche C6 angeschaltet wird.

Durch diese Beschaltung der Figur 8 ist ein kontaktbehaftete Kommunikationsprotokoll, insbesondere ISO, standardmäßig für die Chipkarte verfügbar, um Daten auszutauschen. Über die Kontaktfläche C6 zeigt das Endgerät der Chipkarte zusätzlich an, ob ein Datenaustausch über ein Hochgeschwindigkeitsprotokoll, insbesondere USB oder Firewire, über die Kontakte C6 und C9 erfolgt bzw. das SWP Protokoll am Kontaktfeld C6 angelegt ist. Die übrigen Kontakte C2, C3 sind gemäß ISO Standard verschaltet.

Die Spannungsversorgung an den Kontakten C1 und C5 sind gemäß ISO bzw. gemäß USB Standard entweder dauerhaft angelegt oder werden vom Endgerät dazu verwendet, Protokollwechsel anzuzeigen, insbesondere durch Spannungsmodulationen oder Spannungspegelverletzungen.

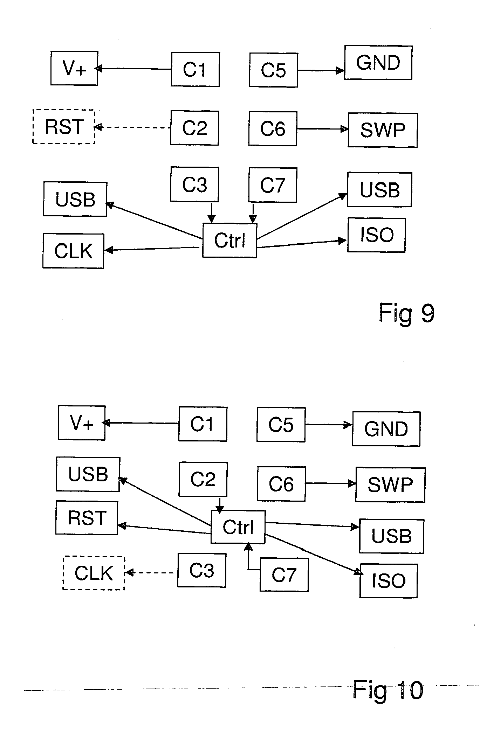

In Figur 9 ist eine Alternative der Erfindung dargestellt. Hier werden die Kontaktflächen C2, C3, C7 zur Umschaltung zwischen ISO und USB verwendet, wohingegen C6 als I/O für das SWP Protokoll immer zur Verfügung steht.

Zunächst wird für einen Betrieb gemäß Figuren 9 und 10 das ISO Protokoll gemäß ISO 7816-3 angelegt und anschließend auf das USB-Protokoll als zweites Kommunikationsprotokoll umgeschaltet. Die Umschaltung von ISO auf USB kann ähnlich wie ETSI TS 102 600 Version 10.0.0 Punkt 7.2 erfolgen. Im Unterschied zur ETSI TS 102 600 sind die Kontakte C4 und C8 für das sechs Kontaktflächen-Kontaktfeld 1 nicht vorgesehen. Als weitere Vorgabe ist der Kontakt C6 für das Betreiben der Chipkarte gemäß SWP-Protokoll nicht zu verwenden.

Um die Umschaltung von ISO auf USB auf der Chipkarte durchzuführen, wird zunächst gemäß der dritten Kombination das ISO-Protokoll an die Kontaktfelder C1, C2, C3, C5, C7 vom Endgerät angelegt werden. Das Endgerät erhält ein Answer-to Reset ATR Antwort gemäß der ETSI TS 102 221 von der Chipkarte erhält. Im ATR wird beschrieben sein, dass der UICC der Chipkarte mittels USB-Protokoll Daten austauschen kann. Möchte das Endgerät die Kommunikation über USB Fortsetzen, sendet es nun ein Protocol Parameter Selection, kurz PPS, Kommando. Insbesondere wird kein 'C0' gesendet, da dies für den USB-Datenaustausch über C4 und C8 reserviert ist. Beispielsweise wird für die erfindungsgemäße Umschaltung auf USB das Kommando 'D0' oder 'E0' vorgesehen, sodass zwischen der Umschaltung auf C4, C8 und der erfindungsgemäßen Umschaltung an zwei der Kontakte oder C7 als die zwei USB-Datenleitungen D+ und D- ist dabei zunächst frei wählbar und anhand zweier Alternativen gemäß Figur 9 und Figur 10 dargestellt.

Die Verwendung von C7 als einen der beiden Datenleitungen D+ oder D- ist insbesondere vorteilhaft, da diese Datenleitung C7 zur Verfügung steht und für keine andere Zwecke im USB-Modus verwendet werden kann. In Figuren 9 und 10 ist daher C7 an die Protokolleinstelleinheit CTRL angeschlossen und entweder als USB Datenleitungsanschluss D+/D- oder als ISO I/O zu verwenden.

Gemäß Figur 9 und 10 sind Ausgestaltungen dargestellt, bei denen neben den benötigten Leitungen zum Anlegen des USB-Protokolls auch eine Sfeuerleitung des ISO-Protokolls verwendet wird. Da diese Steuerleitungen nicht zum USB-Protokoll gehören und als optionale Beschaltung dienen, sind die entsprechenden Kontaktbelegungen gestrichelt dargestellt.

Wird gemäß Figur 9 der C3 Kontakt als die zweite Datenleitung D+ oder D-für das USB-Protokoll verwendet, so ist der Kontakt C2 ohne Verwendung im USB-Modus. Verwendet man Kontakt C2 weiterhin als Reset-Steuersignal gemäß dem ISO-Protokoll im USB oder SWP Modus, so kann ein sehr zuverlässiger Hardware-Reset durchgeführt werden, sobald ein Pegelwechsel am Kontakt C2 erkannt wird. Durch den Hardware-Reset können Fehler bei der Protokollumstellung oder allgemein eine fehlerhafte Chipkartenfunktion vermieden werden.

Wird gemäß Figur 10 alternativ der C2 als die zweite Datenleitung D+ oder D- für das USB-Protokoll verwendet, so ist der Kontakt C3 ohne Verwendung im USB-Modus. Verwendet man den Kontakt C3 weiterhin als Takt-Steuersignal gemäß dem ISO-Protokoll im USB oder SWP Modus, so kann der Chipkarte ein sehr stabiler Takt zur Verfügung gestellt werden, wodurch ein genaues Zeitmanagement bezüglich der Kommandos zu erwarten ist. Dies ist insbesondere bei zeitkritischen Kommandos oder bei Wartezyklen von Vorteil.

### Bezugszeichenliste

- 1: Kontaktfeld
C1 Kontaktfläche Vcc
C2 Kontaktfläche Reset
C3 Kontaktfläche Clock
C4 Kontaktfläche reserviert
C5 Kontaktfläche Masse
C6 Kontaktfläche Vpp bzw SWP
C7 Kontaktfläche I/O
C8 Kontaktfläche reserviert
C9 Kontaktfläche neu
- 2: CPU
20 Protokolleinstelleinheit
21 Protokollerkennungseinheit Ctrl
22 SWP-Protokoll Einheit
23 USB-Protokoll Einheit
24 ISO-Protokoll Einheit
- 3: Speicherbereich
- 4: Bereich der Trennung der Kontaktfläche C5

## Patentansprüche

1. Verfahren zum Austauschen von Daten zwischen einem Endgerät und einer Chipkarte, wobei der Datenaustausch zwischen Endgerät und Chipkarte kontaktbehaftet über ein Kontaktfeld (1) mit sechs Kontaktflächen gemäß ISO-7816-2 Standard erfolgt, mit den Verfahrensschritten:
- Aktivieren einer dritten Kontaktbelegung eines dritten Kommunikationsprotokolls (ISO), wobei das dritte Kommunikationsprotokoll (ISO) ein Kommunikationsprotokoll gemäß ISO-7816 Standard ist und eine dritte Kombination (C1, C2, C3, C5, C7) der sechs Kontaktflächen des Kontaktfelds (1) belegt;
- Erkennen eines Wechsels des Kommunikationsprotokolls vom dritten Kommunikationsprotokoll (ISO) zu einem zweiten Kommunikationsprotokoll (USB) oder einem ersten Kommunikationsprotokoll (SWP) durch eine Protokollerkennungseinheit (21) innerhalb der Chipkarte; und
- Aktivieren einer zweiten Kontaktbelegung in Reaktion auf das erkannte zweite Kommunikationsprotokoll (USB), wobei das zweite Kommunikationsprotokoll (USB) eine vierte Kombination (C1, C2, C3, C5, C7) der sechs Kontaktflächen des Kontaktfeldes (1) belegt;
**dadurch gekennzeichnet dass**:
- das zweite Kommunikationsprotokoll (USB) ein Kommunikationsprotokoll mit zwei Datenleitungen (D+, D-) ist; und
- das erste Kommunikationsprotokolls (SWP) ein vom ISO-7816 Standard verschiedenes Kommunikationsprotokoll (SWP) ist und eine Datenleitung (C6) des ersten Kommunikationsprotokolls (SWP) weder in der dritten Kombination (C1, C2, C3, C5, C7) noch in der vierten Kombination (C1, C2, C3, C5, C7) der sechs Kontaktflächen des Kontaktfelds (1) verwendet wird.

2. Verfahren nach Anspruch 1, wobei die Chipkarte eine Teilnehmeridentifikationskarte und das externe Endgerät ein mobiles Kommunikationsendgerät für den Betrieb in einem Mobilkommunikationsnetz ist.

3. Verfahren nach einem der Ansprüche 1 oder 2, wobei das zweite Kommunikationsprotokoll (USB) ein USB- oder FireWire-Protokoll ist.

4. Verfahren nach einem der vorhergehenden Ansprüche, wobei das erste Kommunikationsprotokoll das Single-Wire-Protokoll (SWP) ist.

5. Verfahren gemäß Anspruch 1 bis 4, wobei zumindest eine Steuerleitung (C2, C3) des dritten Kommunikationsprotokolls (ISO) in dem ersten Kommunikationsprotokoll (SWP) oder zweiten Kommunikationsprotokoll (USB) zusätzlich zu den gemäß ersten Kommunikationsprotokoll (SWP) oder zweiten Kommunikationsprotokoll (USB) benötigten Leitungen verwendet wird.

6. Verfahren nach einem der vorhergehenden Ansprüche, wobei die Chipkarte die Protokollwechsel durch:
- Überwachen eines Signalpegels auf einer, für das jeweils aktivierte Kommunikationsprotokoll nicht verwendeten Kontaktfläche des sechs Kontaktflächen-Kontaktfeldes erkennt und/ oder
- Auswerten eines festgelegten Datenpakets innerhalb des jeweilig aktivierten ersten (SWP) oder zweiten Kommunikationsprotokolls (USB) erkennt.

7. Verfahren nach Anspruch 6, wobei das festgelegte Datenpaket ein für das zu aktivierende Kommunikationsprotokoll (ISO, SWP, USB) vordefinierter Signal-Burst oder eine für das aktivierte Kommunikationsprotokoll eine Verletzung darstellende Signalpegeländerung ist.

8. Verfahren nach einem der vorhergehenden Ansprüche, wobei die Chipkarte den Protokollwechsel durch Überwachen der Spannungsversorgung erkennt.

9. Verfahren nach einem der vorhergehenden Ansprüche, wobei das Kontaktfeld (1) eine zusätzliche siebte Kontaktfläche (C9) aufweist, welche für eine Datenleitung (D+) des zweiten Kommunikationsprotokolls (USB) reserviert ist, wobei die zweite Datenleitung (D-) des zweiten Kommunikationsprotokolls (USB) über Kontaktflächen (C6 oder C7) des Kontaktfeldes (1) aktiviert wird.
